# FASCICULE DE BREVET EUROPEEN

(11) **EP 1 833 693 B1**
(45) Date de publication et mention de la délivrance du brevet: **29.02.2012**
(21) Numéro de dépôt: 06709031.6
(22) Date de dépôt: 04.01.2006
(51) Int. Cl.: B60J 7/14

(54) **TOIT RIGIDE PLIABLE A COMMANDE SIMPLIFIEE**
ZUSAMMENKLAPPBARES STARRES DACH MIT VEREINFACHTEM STEUERSYSTEM
COLLAPSIBLE RIGID ROOF WITH SIMPLIFIED CONTROL SYSTEM

(30) Priorité: 06.01.2005 FR 0500108; 04.08.2005 FR 0508358
(43) Date de publication de la demande: 19.09.2007
(73) Titulaire: HEULIEZ SAS, 79140 Cerizay (FR)
(72) Inventeur: QUEVEAU, Paul, F-79140 Montravers (FR); QUEVEAU, Gérard, F-79140 Le Pin (FR); GUILLEZ, Jean-Marc, F-79140 Cirières (FR)
(74) Mandataire: Novagraaf Technologies
(86) Numéro de dépôt international: PCT/FR2006/000014
(87) Numéro de publication internationale: WO 2006/072739

(56) Documents cités:
- DE-A1- 10 249 640
- US-A1- 2001 042 992
- US-A1- 2002 175 536
- US-A1- 2003 230 907
- US-A1- 2004 004 369

## Description

La présente invention se rapporte à un toit rigide pliable pour véhicule automobile comme décrit dans le préambule de la revendication 1. Un toit tel est connu de US 2004/0004369.

A partir de FR-A- 2 805 218, on connaît un toit rigide pliable mobile entre une position fermée/déployée dans laquelle il recouvre l'habitacle du véhicule, et une position pliée dans laquelle il est rangé à l'écart de cet habitacle. Ce toit comprend une partie avant de toit et une partie arrière de toit, laquelle est articulée à la partie avant de toit et au bâti structurel du véhicule. La partie arrière de toit peut comporter un élément central arrière de toit par lequel elle est articulée à la partie avant de toit et au bâti structurel, et deux éléments latéraux arrière de toit qui définissent entre eux un logement adapté à recevoir l'élément central arrière de toit et qui sont montés mobiles par rapport à cet élément central arrière de toit entre une position d'utilisation dans laquelle l'élément central arrière de toit est dans le logement, le toit étant dans sa position déployée, et une position de rangement dans laquelle l'élément central carrière de toit est disposé au-dessus du logement et au-dessous de la partie avant de toit, le toit étant alors dans sa position pliée. En outre, ce toit comprend des moyens d'entraînement et/ou de guidage avant adaptés à déplacer les éléments latéraux arrière de toit par rapport à l'élément central arrière de toit quand la partie avant de toit est déplacée par rapport à cet élément central arrière de toit.

Un tel toit présente l'avantage de laisser une hauteur de coffre importante quand le toit est plié. En effet, l'élément de toit central arrière qui présente une épaisseur relativement mince sur l'ensemble de sa surface, est désolidarisé des éléments latéraux arrière. Du fait de la désolidarisation, cet élément central arrière est décalé vers le haut par rapport aux éléments de toit latéraux arrière.

La présente invention vise à proposer un toit alternatif, et un véhicule convertible pourvu d'un tel toit, présentant tout ou partie des avantages suivants : fonctionnement simple du toit, dont les articulations sont réalisées par des pivots simples, intégration facilitée dans le véhicule, coût réduit, système d'articulation peu encombrant en Y, montage simple des éléments de toit entre eux et vis-à-vis du bâti structurel du véhicule.

A de telles fins, il est proposé, selon un aspect de l'invention, que les moyens d'entraînement et/ou de guidage avant comprennent des biellettes latérales, chacune montée en rotation, selon un axe de pivotement, à la partie avant de toit et, selon un autre axe de pivotement, directement sur l'élément latéral arrière de toit, pour notamment son déplacement relatif par rapport à l'élément central arrière de toit. Autres caractéristiques de l'invention sont partie de l'objet des revendications dépendantes.

On conseille aussi que tout ou partie des caractéristiques suivantes soient respectées :
- chaque élément latéral de toit est relié vers l'avant à l'élément central arrière de toit par une biellette avant montée à rotation d'une part à l'élément de toit latéral et d'autre part à l'élément de toit central arrière,
- des moyens d'entraînement et/ou de guidage arrière sont reliées, d'une part, à l'élément de toit central arrière et, d'autre part aux éléments latéraux arrière de toit,
- lesdits moyens d'entraînement et/ou de guidage arrière sont formés par des biellettes arrière reliées à articulation, d'une part à l'élément central arrière de toit et d'autre part aux éléments latéraux arrière de toit,
- l'élément de toit central arrière reçoit fixement, latéralement de part et d'autre, une pièce de support arrière portant à articulation les biellettes avant et/ou arrière,
- chaque pièce de support arrière porte à articulation l'élément de toit avant,
- chaque pièce de support arrière porte une partie de l'articulation de l'élément de toit central arrière par rapport au bâti structurel,
- l'élément de toit avant reçoit fixement, latéralement de part et d'autre une pièce de support avant portant à articulation la biellette de commande,
- la pièce, ou organe, de support avant porte à articulation l'élément de toit central arrière,
- ladite pièce de support avant porte à articulation une première extrémité d'un bras de commande de l'élément de toit avant,
- l'élément de toit central arrière est articulé au bâti structurel, de part et d'autre, par un palier porté par une platine solidaire du bâti structurel,
- ladite platine porte à articulation une deuxième extrémité d'un/dudit bras de commande de l'élément de toit avant,
- les éléments latéraux de toit sont portés par des pièces de support latéral portant articulation au moins un l'une des dites biellettes,
- les éléments latéraux de toit sont assemblés aux autres éléments de toit par des moyens de montage rapide,
- ces moyens de montage rapide sont disposés pour fixer entre eux les pièces de support latéral et les éléments latéraux de toit.

D'autres particularité et avantages apparaîtront dans la description donnée à titre d'exemple non limitatif et illustrée par les dessins mis en annexe.
La figure 1 est une vue schématique de côté d'un véhicule convertible adapté à l'invention,
la figure 2 est une demi-vue schématique en perspective, de moyens essentiels d'un toit conforme à une solution ici préconisée le toit complet étant à imaginer par symétrie vis-à-vis de l'axe longitudinal médian de coupe 10a, et
les figures 3,4,5 sont des coupes schématiques longitudinales du même toit, successivement dans sa position fermée/déployée recouvrant l'habitacle du véhicule, dans une position intermédiaire entre ses états déployé et plié, et dans sa position ouverte/pliée, ici rangée dans le coffre arrière du véhicule.

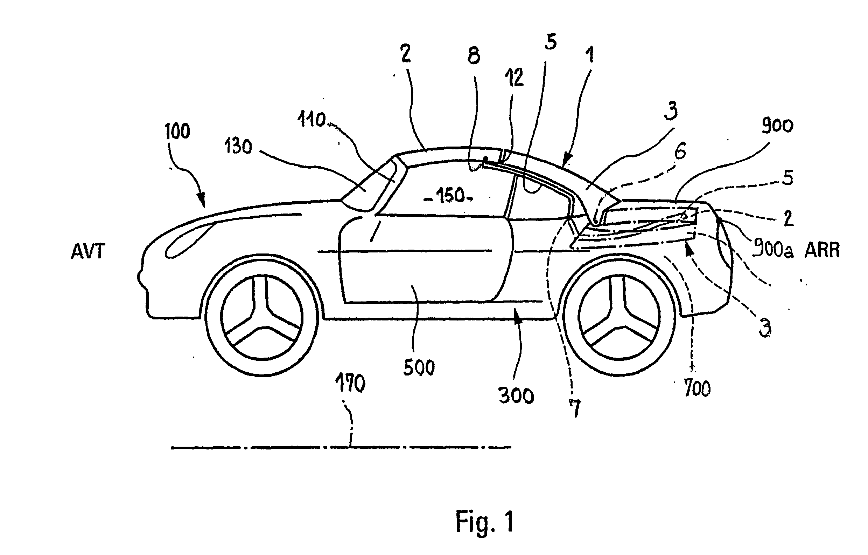

Figure 1, le véhicule 100 comprend un bâti structurel 300, également appelé caisse ou structure du véhicule, qui intègre ici, rapporté sur lui, les portières telles que 500, un coffre arrière 700 et un cadre frontal 110 délimitant un pare-brise 130, notamment.

Le véhicule 100 est un coupé découvrable à toit 1 ici entièrement escamotable dans le coffre 700, à l'arrière de l'habitacle 150. Le coffre est pourvu d'un capot 900 monté pivotant sur le bâti structurel 300, vers son extrémité arrière, autour d'un axe transversal 900a, pour s'ouvrir en pivotant de l'avant vers l'arrière du véhicule.

Le toit 1 s'articule sur le bâti structurel 300 entre une position fermée représenté en trait plein sur la figure 1 et une position ouverte, repliée, représenté en traits mixtes sur cette même figure. Dans la position fermée, le toit s'étend au-dessus de l'habitacle 150 qu'il ferme au moins essentiellement à sa partie supérieure, tandis qu'en position ouverte, le toit est ici disposé derrière l'habitacle.

Le toit 1 comprend plusieurs panneaux de toit rigides, mobiles, adaptés pour recouvrir l'habitacle 150 dans leur première position relative déployée, tout en pouvant être repliés les uns vers les autres dans la deuxième position ouverte, rangée du toit.

Figure 1, AVT et ARR repèrent respectivement l'avant et l'arrière du véhicule, suivant l'axe longitudinal 170.

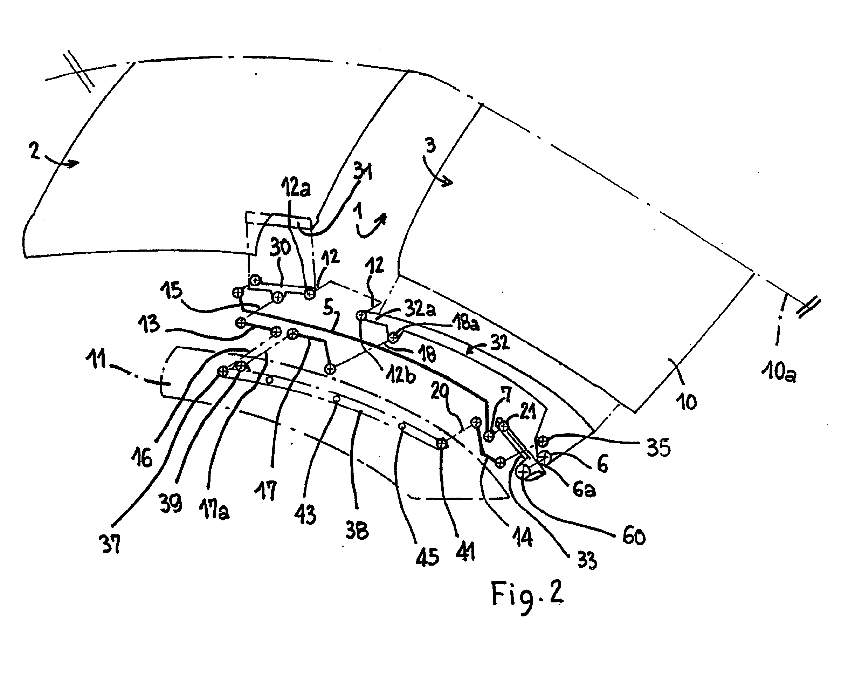

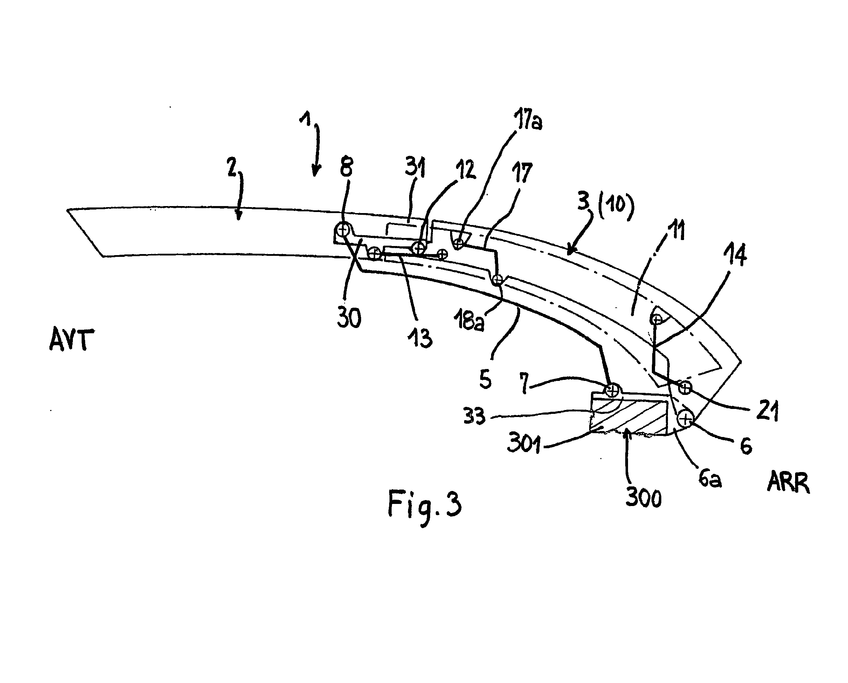

Comme on peut le voir aux figures 2 à 5, le toit rigide pliable 1 comprend une partie avant de toit 2 et une partie arrière de toit 3. La partie arrière de toit 3 est articulée, par son extrémité avant, à la partie avant de toit 2, et, par son extrémité arrière, au bâti structurel 300 du véhicule. De façon connu, des organes de déplacement 5,6 sont adaptés à entraîner le toit 1 entre ses positions fermée-déployée et ouverte-pliée, la partie avant de toit 2 étant alors disposée au-dessus de la partie arrière de toit 3.

Les organes de déplacement 5,6 comprennent deux bras 5 latéraux, chaque bras 5 étant monté pivotant d'une part, par rapport au bâti structurel 300, selon un premier axe de rotation 7 s'étendant selon la direction transversale du véhicule, et, d'autre part, à la partie avant de toit 2 (et plus précisément près du bord arrière de la partie avant de toit 2) selon un second axe de rotation 8 s'étendant également selon la direction transversale du véhicule.

On nomme transversale toute direction transversale, en particulier perpendiculaire, à l'axe longitudinal 170.

Ces organes de déplacement 5,6 comprennent également un arbre d'entraînement 6 qui s'étend transversalement au véhicule. Chaque arbre d'entraînement est solidarisé à la partie arrière de toit 3 (ici et favorablement près de son bord latéral arrière, via l'organe intermédiaire 32 cité ci-après monté sur un élément 10 du toit) et est monté rotatif dans des paliers portés par le bâti 300, réalisant l'articulation entre ce bâti et la partie arrière de toit 3.

La partie arrière de toit 3 comporte un élément central arrière 10 et deux éléments latéraux arrière 11 qui définissent entre eux un logement adapté à recevoir l'élément central arrière 10.

Comme on peut le voir aux figures, l'élément central 10 (par son bord avant) est monté rotatif par rapport à la partie avant de toit 2 selon un axe de liaison 12 s'étendant selon la direction transversale du véhicule et situé en arrière du second axe de rotation 8.

On note que, de part et d'autre du toit, cet axe de liaison 12 passe par des pivots d'articulation-rotation 12a,12b. Le pivot 12a illustré est porté par un organe intermédiaire 30 (appelé également pièce de support avant) fixé, typiquement soudé, sur la partie avant de toit, latéralement, vers le bord arrière de celui-ci, ici à l'endroit de la découpe latérale 31. Du même côté, le pivot 12b est porté par l'excroissance avant 32a d'un deuxième organe intermédiaire 32 (appelé également pièce de support arrière) fixé, typiquement soudé, sur la partie centrale arrière de toit 10, latéralement, ici tout le long du bord latéral montré, voir notamment fig.2. L'organe 32 est allongé, cintré comme la partie de toit 3 et s'élargit à l'arrière pour porter, via un palier 6a, l'arbre d'entraînement 6. On voit sur cette figure que cet arbre 6 d'entraînement de l'élément arrière de toit 10 est favorablement supporté, via un palier 60, par une platine latérale 33 s'appuyant sur un élément 301 du bâti structurel 300, tel qu'une poutre transversale de structuration. La/chaque platine latérale 33 peut également supporter un pivot 21 associé à l'axe de rotation 7 du bras d'articulation 5 qui tournera alors par rapport à elle, autour de cet axe. Chaque platine latérale 33 pourra se présenter comme une plaque unique coudée en équerre adaptée donc pour porter à pivotement le bras d'articulation 5 et l'arbre 6 d'entraînement de l'élément arrière de toit 10.

En outre, l'arbre d'entraînement 6 est lié audit élément central 10 de toit (et plus précisément à son bord arrière) en 6a, par l'organe intermédiaire 32.

Les éléments latéraux 11 sont montés mobiles par rapport à l'élément central 10 entre une position d'utilisation dans laquelle l'élément central 10 est dans le logement, le toit 1 étant dans sa position déployée, et une position de rangement dans laquelle la totalité de l'élément central 10 est disposé au-dessus du logement, le toit étant dans sa position pliée. A cet effet, le toit 1 comprend des moyens d'entraînement et de guidage avant 17 et arrière 14 adaptés à permettre le déplacement des éléments latéraux 11 par rapport à l'élément central 10 quand la partie avant de toit 2 est déplacée par rapport à l'élément central 10. Ces moyens d'entraînement et de guidage avant 17 et arrière 14 font intégralement partie du toit 1 : ils ne sont en contact ni avec le bâti structurel 300, ni avec les organes de déplacement 5,6.

La fonction d'entraînement/guidage de ces moyens 17 et 14 est assurée au moins en ce qu'étant rigides (typiquement des biellettes, ou des glissières notamment pour les moyens arrière 14), ils participent à cet d'entraînement, en guidant suivant une direction déterminée, précise. Ci-après, on les appelle simplement « moyens de guidage ».

Parmi eux, les moyens de guidage avant 17 sont reliés d'une part à l'élément latéral 11 de toit concerné (vers l'avant de cet élément) et, d'autre part, à la partie arrière de toit 3 (et plus précisément vers son bord avant, ici via le deuxième organe intermédiaire 32).

Les moyens de guidage avant 17 comprennent favorablement deux biellettes disposées de chaque côté du toit 1.

Chaque biellette 17 est montée en rotation à l'avant directement sur l'élément latéral 11 de toit concerné, selon un premier axe de pivotement transversal 17a, à l'endroit du pivot 39 sur le côté montré figure 2. A l'arrière, chaque biellette 17 est montée articulée sur la partie arrière de toit 10, via le pivot 18a porté par le deuxième organe intermédiaire 32 et selon un second axe de pivotement transversal 18.

Quant aux moyens de guidage arrière 14, ils sont situés, toujours toit supposé fermé, vers dans la partie arrière de toit 3 (et plus précisément vers son bord arrière). Ces moyens de guidage 14 sont reliés, d'une part, à l'élément central de toit 10 (favorablement son bord arrière) et, d'autre part, aux éléments latéraux 11 (favorablement leur bord arrière).

Comme indiqué ces moyens de guidage arrière 14 pourraient être deux systèmes latéraux à glissière.

Dans la réalisation illustrée il s'agit de tiges ou biellettes arrière 14, latérales.

A l'avant, chaque tige arrière 14 est ici montée en rotation sur et par rapport à l'élément latéral de toit 11 correspondant (vers son bord) selon un axe transversal 20, à l'endroit du pivot 41.

A l'arrière, chaque tige arrière 14 est ici montée en rotation par rapport à l'élément central 10, selon un autre axe transversal 22. Pour cela, elle est montée sur l'arrière du deuxième organe intermédiaire 32, à l'endroit du pivot 35.

Chaque pivot 35 sur l'organe 32 est proche du palier 6a correspondant.

A proximité du pivot 39 d'articulation de l'axe 17a sur l'élément latéral 11 de toit concerné se trouve en outre un autre pivot 37 pour le moyen de déplacement, ou d'entraînement, 13, lequel est adapté à déplacer, en particulier articuler, l'un par rapport à l'autre l'élément latéral 11 correspondant et l'élément avant 2 de toit. A l'avant du moyen d'entraînement 13 et en partie intermédiaire du premier organe intermédiaire 30 de liaison fixé à l'élément avant 2 de toit, cette articulation s'opère selon le troisième axe transversal de pivotement 15. A l'arrière, l'articulation s'opère selon le quatrième axe transversal de pivotement 16, permettant ainsi l'articulation de ce moyen 17 sur l'élément latéral 11 de toit, via le pivot 37.

Chaque moyen de déplacement 13 sera de préférence formé par une tige de liaison, ou biellette de commande, articulée en rotation comme indiqué ci-dessus.

Ici, le premier axe de pivotement 15 est disposé en arrière du second axe de rotation 8, et en avant de l'axe de liaison 12.

On remarquera également que, suivant la direction longitudinale 170, depuis l'avant vers l'arrière, on trouve successivement les axes latéraux et parallèles de pivotement 16,17a puis 18.

En fonctionnement, le déplacement de l'élément central 10 par rapport à la partie avant de toit 2 entraîne le déplacement des biellettes 13 et donc des éléments latéraux 11 de toit qui basculent par rapport à l'élément central arrière 10 sur les tiges de liaison 17 et 14, grâce aux articulations 17a,18,20 et 22.

Au début de l'ouverture du toit 1, alors supposé fermé comme montré en trait plein figure 1 ou 2, les biellettes 13 permettent de pousser les éléments latéraux 11 dans une direction sensiblement perpendiculaire à la surface du l'élément central 10.

De ce fait, les joints (non représentés) qui sont disposés entre l'élément central 10 l'élément avant et les éléments latéraux 11 ne subissent principalement qu'un décollement, les frottements dans le sens longitudinal étant fortement diminués.

Au début du mouvement d'ouverture du toit, les biellettes de commande 13 vont donc favorablement, et dans ce mode de réalisation, pousser les éléments latéraux de toit 11 vers le haut et l'arrière, ce qui permettra de bien décoller ces éléments latéraux des joints, sans friction.

Inversement en fin de mouvement de fermeture, comme sur la figure 2, ces biellettes de commande 13 tireront favorablement, comme ici montré, lesdits éléments latéraux de toit 11 vers l'avant et le bas ce qui permettra une bonne mise en contact des joints et une mise en pression du toit.

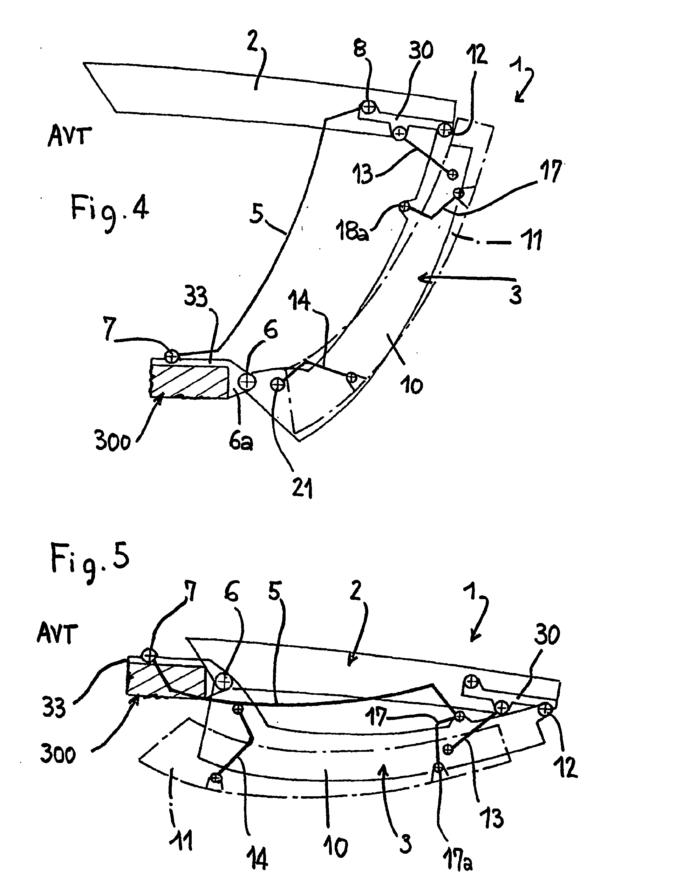

Vers la fin du mouvement d'ouverture, comme sur la figure 4, les mêmes biellettes latérales 13 pousseront ici les éléments latéraux de toit 11 vers l'avant et le haut, ce qui permettra de disposer d'espace vers l'arrière, par exemple pour les feux arrière du véhicule ou pour un meilleur accès aux bagages, dans le coffre 700 (fig.1). Cette faculté permet également de contourner aisément les passages de roues ou d'autres obstacles tels que le tuyau de remplissage de carburant. Le toit 1 sera alors disposé rangé avec donc ses éléments de toit 2 et 10 disposés sensiblement à plat, à peu près horizontalement, avec leurs cambrures inversées, repliés l'un (2) sur l'autre (10), les éléments latéraux 11 pendant, à côté, de part et d'autre de l'élément central arrière de toit 10.

En toute circonstance, le pilotage du mouvement des éléments latéraux de toit 11 pourra être ajusté selon l'environnement, en positionnant les points d'articulation des biellettes et/ou tiges précitées à des endroits appropriés.

Par ailleurs on peut envisager de donner à ces biellettes et/ou tiges rigides précitées une possibilité de réglage en longueur qui peut permettre un réglage final lors du montage sur le véhicule.

Au titre des avantages de ce qui est ici présenté, on notera encore que :
- la solution proposée est simple : les articulations sont favorablement réalisées par des pivots simples, donc une faible usure et pas d'entretien,
- le système d'articulation est peu encombrant en Y (axe horizontal, perpendiculaire à X, c'est-à-dire à l'axe 170: en effet les bras biellettes et/ou tiges sont des pièces de faible épaisseur que l'on vient superposer, d'où une faible épaisseur de l'ensemble monté,

- comme décrit ci-avant les mouvements desdits éléments ou parties de toit 2,10,11 sont performants, et
- le montage est simple, notamment si l'on suit les recommandations suivantes :
   a) les éléments de toits avant 2 et arrière central 10 peuvent être réalisés avec les pièces support avant 30 et arrière 33 déjà fixées à eux,
   b) de part et d'autre du toit, latéralement, on montera alors, par le côté, la première extrémité (articulation 8) des bras 5 et l'ensemble des biellettes et/ou tiges 13,14,17,
   c) on assemblera ensuite la deuxième extrémité (articulation 7) desdits bras 5 et l'élément central arrière de toit 10 sur les platines support 33,
   d) on reliera alors, toujours de chaque côté du toit, les trois biellettes 13,14,17 à une pièce de support latéral, telle que la plaque allongée 38 pour le côté illustré figure 2, ceci respectivement à l'endroit des pivots repérés 37,39,41 sur cette figure 2, pour le côté illustré,
   e) de préférence ensuite seulement, on fixera les éléments latéraux 11 de toit sur ces pièces support latéral, 38. Cette fixation sera avantageusement réalisée par des moyens de montage rapide tels que des systèmes à clipsage rapide, voir repères 43,45,47 figure 2. Ainsi, on laissera accessible jusqu'au dernier moment les biellettes et/ou tiges 13,14,17, ainsi par exemple que chaque bras 5, les pièces de support latéral 38 étant alors liées à articulation avec lesdites biellettes et/ou tiges 13,14,17. Favorablement donc au dernier moment, on montera lesdits éléments latéraux 11 de toit sur les pièces de support latéral 38, via ces moyens de montage rapide 43,45,47 tels que des moyens de clipsage ou de vissage.

Sur les figures 2 et suivantes, on notera que chaque croix cerclée désigne un pivot ou un palier, en liaison avec un axe de rotation ou d'articulation.

## Revendications

1. Toit (1) rigide pliable monté sur un véhicule automobile comprenant un bâti structurel (300), le toit (1) étant mobile entre une position déployée dans laquelle il recouvre l'habitacle du véhicule, et une position pliée dans laquelle il est rangé à l'écart de cet habitacle, le toit (1) comprenant une partie avant de toit (2) et une partie arrière de toit (3), laquelle est articulée à la partie avant de toit (2) et au bâti structurel (300) du véhicule, la partie arrière de toit (3) comportant un élément central arrière de toit (10) par lequel elle est articulée à la partie avant de toit (2) et au bâti structurel (300), et deux éléments latéraux arrière de toit (11) qui définissent entre eux un logement adapté à recevoir l'élément central arrière de toit (10) et qui sont montés mobiles par rapport à l'élément central arrière de toit (10) entre une position d'utilisation dans laquelle l'élément central arrière de toit (10) est dans le logement, le toit (1) étant dans sa position déployée, et une position de rangement dans laquelle l'élément central arrière de toit (10) est disposé au-dessus du logement et au-dessous de la partie avant de toit (2), le toit (1) étant alors dans sa position pliée, le toit (1) comprenant en outre des moyens d'entraînement et de guidage avant (13) qui sont adaptés à déplacer les éléments latéraux arrière de toit (11) par rapport à l'élément central arrière de toit (10) quand la partie avant de toit (2) est déplacée par rapport à l'élément central arrière de toit (10), **caractérisé en ce que** les moyens d'entraînement et de guidage avant (13) comprennent des biellettes (13) latérales, chaque biellette (13) étant montée en rotation, selon un axe de pivotement (15), à la partie avant de toit (2) et, selon un autre axe de pivotement (16), directement sur l'élément latéral arrière de toit (11), pour notamment son déplacement relatif par rapport à l'élément central arrière de toit (10).

2. Toit selon la revendication 1, dans lequel lesdits éléments latéraux arrière de toit (11) sont montés mobiles sur l'élément central arrière de toit (10).

3. Toit selon la revendication 1 ou 2, dans lequel chaque élément latéral de toit (11) est relié vers l'avant à l'élément central arrière de toit (10) par une biellette avant (17) montée à rotation, selon un axe de pivotement (17a), à l'élément de toit latéral et, selon un autre axe de pivotement (18), à l'élément de toit central arrière.

4. Toit selon l'une des revendications précédentes comprenant des moyens d'entraînement et de guidage arrière (14) qui sont reliées, d'une part, à l'élément de toit central arrière (10) et, d'autre part, aux éléments latéraux arrière de toit (11).

5. Toit selon la revendication 4, dans lequel les moyens d'entraînement et de guidage arrière sont formés par des biellettes arrière (14) reliées à articulation, selon un axe de pivotement, à l'élément central arrière de toit (10) et, selon un autre axe de pivotement (20), aux éléments latéraux arrière de toit (11).

6. Toit selon l'une des revendications 3 à 5, dans lequel l'élément de toit central arrière (10) reçoit fixement, latéralement de part et d'autre, une pièce de support arrière (32) portant à articulation les biellettes avant et/ou arrière (17,14).

7. Toit selon la revendication 6, dans lequel chaque pièce de support arrière (32) porte à articulation l'élément de toit avant (2) et/ou porte une partie de l'articulation de l'élément de toit central arrière (10) par rapport au bâti structurel (33,300).

8. Toit selon l'une quelconque des revendications précédentes dans lequel l'élément de toit avant (2) reçoit fixement, latéralement de part et d'autre une pièce de support avant (30) portant à articulation la biellette de commande (13).

9. Toit selon la revendication 8, dans lequel la pièce de support avant (30) porte à articulation l'élément de toit central arrière (10).

10. Toit selon l'une des revendications 8 ou 9, dans lequel la pièce de support avant (30) porte à articulation (8) une première extrémité d'un bras de commande (5) de l'élément de toit avant (2).

11. Toit selon l'une quelconque des revendications précédentes, dans lequel l'élément de toit central arrière (10) est articulé au bâti structurel (300), de part et d'autre, par un palier (6a) porté par une platine (33) solidaire du bâti structurel.

12. Toit selon la revendication 11, dans lequel la platine (33) porte à articulation (7) une deuxième extrémité d'un bras (5) de commande de l'élément de toit avant (2).

13. Toit selon l'une des revendications précédentes, dans lequel les éléments latéraux de toit (11) sont portés par des pièces de support latéral (38) portant à articulation au moins l'une des dites biellettes (13,14,17).

14. Toit selon l'une quelconque des revendications précédentes dans lequel les éléments latéraux de toit (11) sont assemblés aux autres éléments de toit (2,10) par des moyens de le montage rapide (43,45,47), tels que des moyens de clipsage ou de vissage.

15. Toit selon les revendications 13 et 14, dans lequel les moyens de montage rapide (43,45,47) sont disposés pour fixer entre eux les pièces de support latéral (38) et les éléments latéraux de toit (11).

16. Véhicule convertible pourvu du toit selon l'une quelconque des revendications précédentes.

## Claims

1. Collapsible rigid roof (1) mounted on a motor vehicle including a structural frame (300), the roof (1) being movable between a deployed position in which it covers the passenger compartment of the vehicle, and a folded position in which it is stowed away from the said compartment, the roof (1) comprising a front roof part (2) and a rear roof part (3), which is articulated with the front roof part (2) and with the structural frame (300) of the vehicle, the rear roof part (3) comprising a rear central roof element (10) by which it is articulated with the front roof part (2) and with the structural frame (300), and two rear lateral roof elements (11) which define therebetween a housing designed to receive the rear central roof element (10) and which are mounted movably in relation to the rear central roof element (10) between a usage position in which the rear central roof element (10) is disposed in the housing, the roof (1) being in its deployed position, and a stowed position in which the rear central roof element (10) is disposed above the housing and below the front roof part (2), the roof (1) then being in its folded position, the roof (1) additionally including front actuating and guiding means (13) which are designed to move the rear lateral roof elements (11) in relation to the rear central roof element (10) when the front roof part (2) is moved relative to the rear central roof element (10), **characterised in that** the front actuating and guiding means (13) include lateral connecting rods (13), each connecting rod (13) being rotatably mounted, about a pivot axis (15), to the front roof part (2) and, about another pivot axis (16), directly to the rear lateral roof element (11), in particular for the movement thereof in relation to the rear central roof element (10).

2. Roof according to claim 1, wherein the said rear lateral roof elements (11) are movably mounted on the rear central roof element (10).

3. Roof according to claim 1 or 2, wherein each lateral roof element (11) is connected at the front to the rear central roof element (10) by a front connecting rod (17) rotatably mounted, about a pivot axis (17a), to the lateral roof element and, about another pivot axis (18), to the rear central roof element.

4. Roof according to any one of the preceding claims, including rear actuating and guiding means (14) which are connected, on the one hand, to the rear central roof element (10) and, on the other hand, to the rear lateral roof elements (11).

5. Roof according to claim 4, wherein the rear actuating and guiding means are formed by rear connecting rods (14) hingeably mounted, on a pivot axis, to the rear central roof element (10) and, on another pivot axis (20), to the rear lateral roof elements (11).

6. Roof according to any one of claims 3 to 5, wherein the rear central roof element (10) receives in a fixed manner, laterally on each side, a rear support member (32) hingeably supporting the front and/or rear connecting rods (17, 14).

7. Roof according to claim 6, wherein each rear support member (32) hingeably supports the front roof part (2) and/or supports a part of the articulation of the rear central roof element (10) relative to the structural frame (33, 300).

8. Roof according to any one of the preceding claims, wherein the front roof part (2) receives in a fixed manner, laterally on each side, a front support member (30) hingeably supporting the control rod (13).

9. Roof according to claim 8, wherein the front support member (30) hingeably supports the rear central roof element (10).

10. Roof according to either of claims 8 or 9, wherein the front support member (30) hingeably supports (8) a first end of an arm (5) for controlling the front roof part (2).

11. Roof according to any one of the preceding claims, wherein the rear central roof element (10) is articulated with the structural frame (300), on both sides, by a bearing (6a) supported by a plate (33) integral with the structural frame.

12. Roof according to claim 11, wherein the plate (33) hingeably supports (7) a second end of an arm (5) for controlling the front roof element (2).

13. Roof according to any one of the preceding claims, wherein the lateral roof elements (11) are supported by lateral support members (38) hingeably supporting at least one of the said connecting rods (13, 14, 17).

14. Roof according to any one of the preceding claims, wherein the lateral roof elements (11) are assembled to the other roof elements (2, 10) by quick assembly means (43, 45, 47), such as clipping or screwing means.

15. Roof according to claims 13 and 14, wherein the quick assembly means (43, 45, 47) are arranged so as to fasten therebetween the lateral support members (38) and the lateral roof elements (11).

16. Convertible vehicle provided with a roof according to any one of the preceding claims.

## Patentansprüche

1. Faltbares steifes Dach (1), das auf einem Kraftfahrzeug angebracht ist, mit einem Strukturrahmen (300), wobei das Dach (1) zwischen einer entfalteten Position, in welcher dieses die Fahrgastzelle abdeckt, und einer gefalteten Position, in welcher dieses in Abstand zu dieser Fahrgastzelle verstaut ist, beweglich ist, wobei das Dach (1) einen vorderen Dachbereich (2) und einen hinteren Dachbereich (3), welcher an dem vorderen Dachbereich (2) und an dem Strukturrahmen (300) des Fahrzeugs angelenkt ist, aufweist, wobei der hintere Dachbereich (3) aufweist ein hinteres Dach-Zentralelement (10) durch welches dieser an dem vorderen Dachbereich (2) und dem Strukturrahmen (300) angelenkt ist, und zwei hintere Dach-Seitenelemente (11), welche zwischen sich eine Aufnahme bilden, die so ausgelegt ist, dass diese das hintere Dach-Zentralelement (10) aufnimmt, und die in Bezug zu dem hinteren Dach-Zentralelement (10) zwischen einer Benutzungsposition, in welcher das hintere Dach-Zentralelement (10) sich in der Aufnahme befindet, wobei das Dach (1) in dieser Position entfaltet ist, und einer Verstauposition, in welcher das hintere Dach-Zentralelement (10) oberhalb der Aufnahme und unterhalb des vorderen Dachbereichs (2) angeordnet ist, beweglich montiert sind, wobei das Dach (1) sich dann in seiner gefalteten Position befindet, wobei das Dach (1) ferner vordere Mittel zum Antrieb und zur Führung (13) umfassen, die so ausgebildet sind, dass diese die hinteren Dach-Seitenelemente (11) in Bezug zu dem hinteren Dach-Zentralelement (10) verschieben, wenn der vordere Dachbereich (2) in Bezug zu dem hinteren Dach-Zentralelement (10) verschoben ist, **dadurch gekennzeichnet, dass** die vorderen Mittel zum Antrieb und zur Führung (13) seitliche Stäbchen (13) umfassen, wobei jedes Stäbchen (13) drehbar entlang einer Schwenkachse (15) an dem vorderen Dachbereich (2) und entlang einer weiteren Schwenkachse (16) direkt an dem hinteren Dach-Seitenelement (11) montiert ist, um insbesondere dieses relativ in Bezug zu dem hinteren Dach-Zentralelement (10) zu verschieben.

2. Dach nach Anspruch 1, in welchem die hinteren Dach-Seitenelemente (11) beweglich an dem hinteren Dach-Zentralelement (10) angebracht sind.

3. Dach nach Anspruch 1 oder 2, in welchem jedes Dach-Seitenelement (11) nach vorne mit dem hinteren Dach-Zentralelement (10) durch ein drehbar angebrachtes vorderes Stäbchen (17) entlang einer Schwenkachse (17a) mit dem seitlichen Dachelement und entlang einer anderen Schwenkachse (18) mit dem hinteren zentralen Dachelement verbunden ist.

4. Dach nach einem der vorhergehenden Ansprüche mit hinteren Mitteln zum Antrieb und zur Führung (14) die einerseits mit dem hinteren Dach-Zentralelement (10) und andererseits mit den hinteren Dach-Seitenelementen (11) verbunden sind.

5. Dach nach Anspruch 4, in welchem die hinteren Mittel zum Antrieb und zur Führung durch hintere Stäbchen (14) gebildet sind, die gelenkig entlang einer Schwenkachse mit dem hinteren Dach-Zentralelement (10) und entlang einer weiteren Schwenkachse (20) mit den hinteren Dach-Seitenelementen (11) verbunden sind.

6. Dach nach einem der Ansprüche 3 bis 5, in welchem das hintere Dach-Zentralelement (10) beidseitig fest ein hinteres Trägerteil (32) aufnimmt, welches gelenkig vordere und/oder hintere Stäbchen (17, 14) trägt.

7. Dach nach Anspruch 6, in welchem jedes hintere Trägerteil (32) das vordere Dachelement (2) trägt und/oder einen Gelenkbereich des hinteren Dach-Zentralelements (10) in Bezug zu dem Strukturrahmen (33, 300) trägt.

8. Dach nach einem der vorhergehenden Ansprüche, in welchem das vordere Dachelement (2) beidseitig fest ein vorderes Trägerteil (30) aufnimmt, welches gelenkig das Steuerstäbchen (13) trägt.

9. Dach nach Anspruch 8, in welchem das vordere Trägerteil (30) gelenkig das hintere Dach-Zentralelement (10) trägt.

10. Dach nach einem der Ansprüche 8 oder 9, in welchem das vordere Trägerteil (30) gelenkig (8) ein hinteres Ende eines Steuerarms (5) des vorderen Dachelements (2) trägt.

11. Dach nach einem der vorhergehenden Ansprüche, in welchem das hintere Dach-Zentralelement (10) an den Strukturrahmen (300), beidseitig durch ein Lager (6a) angelenkt ist, das durch eine Platine (33) getragen wird, die mit dem Strukturrahmen fest verbunden ist.

12. Dach nach Anspruch 11, in welchem die Platine (33) gelenkig (7) ein zweites Ende eines Steuerarms (5) des vorderen Dachelements (2) trägt.

13. Dach nach einem der vorhergehenden Ansprüche, in welchem die Dach-Seitenelemente (11) durch seitliche Trägerteile (38) getragen werden, die gelenkig wenigstens eines der Stäbchen (13, 14, 17) tragen.

14. Dach nach einem der vorhergehenden Ansprüche, in welchem die Dach-Seitenelemente (11) aus weiteren Dachelementen (2, 10) mit Hilfe von Schnellmontagemitteln (43, 45, 47) zusammengesetzt sind, wie Rast- oder Schraubmittel.

15. Dach nach den Ansprüchen 13 und 14, in welchem die Schnellmontagemittel (43, 45, 47) derart angeordnet sind, um zwischen ihnen die seitlichen Trägerteile (38) und die Dach-Seitenelemente (11) zu befestigen.

16. Cabrio, versehen mit dem Dach nach einem der vorhergehenden Ansprüche.
